**Europäisches Patentamt**

**European Patent Office**

**Office européen des brevets**

(19)

(11) Veröffentlichungsnummer: **0 009 120**
**B1**

(12)

# EUROPÄISCHE PATENTSCHRIFT

(45) Veröffentlichungstag der Patentschrift:
07.07.82

(21) Anmeldenummer: 79102973.9

(22) Anmeldetag: 16.08.79

(51) Int. Cl.³: **F 16 F 9/10,** F 16 F 1/38 //
B60K5/12

(54) Hydraulisch dämpfendes Gummilager.

(30) Priorität: 23.09.78 DE 2841505

(43) Veröffentlichungstag der Anmeldung:
02.04.80 Patentblatt 80/7

(45) Bekanntmachung des Hinweises auf die Patenterteilung:
07.07.82 Patentblatt 82/27

(84) Benannte Vertragsstaaten:
**BE FR GB IT NL SE**

(56) Entgegenhaltungen:
**DE-A-1 775 158**
**DE-A-1 942 853**
**DE-A-2 520 947**
**DE-A-2 611 299**
**DE-A-2 618 333**
**DE-A-2 722 500**
**DE-C- 729 930**
**FR-A-1 559 799**
**FR-A-2 255 507**
**FR-A-2 298 737**
**US-A-2 614 896**
**US-A-3 147 964**
**US-A-3 698 703**

(73) Patentinhaber: **Boge GmbH, Bogestrasse 50,
D-5208 Eitorf/Sieg (DE)**

(72) Erfinder: **Hamaekers, Arno, Dipl.-Ing.,
Brunhildstrasse 27, D-6944 Hemsbach (DE)**

EP 0 009 120 B1

## Hydraulisch dämpfendes Gummilager

Die Erfindung betrifft ein hydraulisch dämpfendes Gummilager, bestehend aus einem Innenrohr, einem konzentrisch oder exzentrisch dazu mit Abstand angeordneten Aussenrohr und dazwischen eingesetztem Gummiteil, in welchem dämpfungsmittelgefüllte, hydraulisch über umfangsseitig angeordnete, als Drosseln wirkende Oberströmkanäle miteinander verbundene Kammern ausgebildet sind.

Aus der DE-A-1 942 853, insbesondere Fig. 5, ist ein hydraulisch dämpfendes Gummilager der vorstehend beschriebenen Gattung grundsätzlich bekannt. Bei dem bekannten Gummilager sind die Oberströmkanäle zur hydraulischen Verbindung der Kammern als an der Oberfläche des Gummiteils angeordnete Nuten ausgebildet. Die Kammern selbst sind ebenfalls aus äusseren Bereichen des Gummiteils ausgespart und nach aussen hin offen. Um eine ausreichend sichere Abdichtung der Kammern und der Drosselkanäle nach ausserhalb des Lagers hin zu erhalten, muss, wie leicht einzusehen der Gummiteil mit hoher Vorspannung im Aussenrohr montiert werden. Abgesehen davon, dass hierbei das Füllen und Entlüften des bekannten Gummilagers besonders schwierig ist und im übrigen infolge der hohen Gummispannung bei dem bekannten Gummilager weiche Federraten mit grossen Hüben kaum möglich sind, ergeben sich jedoch vor allem besonders wesentliche Nachteile hinsichtlich der Überströmkanäle. Insbesondere ergeben sich bei dem bekannten Gummilager weitgehend undefinierte Drosselverhältnisse dadurch, dass beim Aufbringen der Vorspannung bei der Montage nicht exakt reproduzierbare Verhältnisse vorliegen und anderseits bei Laständerungen im Arbeitsbereich ständig wechselnde Verhältnisse entstehen, die sich entsprechend unterschiedlich auf den Querschnitt der Drosselkanäle auswirken. Insbesondere aufgrund der zuletzt genannten Nachteile ist es bei dem bekannten Gummilager praktisch nicht möglich, eine definierte hydraulische Verbindung zwischen den Kammern zu schaffen, die eine Anpassung der Lagerausbildung an verschiedene Belastungsfälle ermöglicht.

Der vorliegenden Erfindung liegt die Aufgabe zugrunde, bei einem Gummilager der eingangs beschriebenen Gattung eine Vereinfachung der Abdichtung zwischen dem Gummiteil und dem Aussenrohr zu ermöglichen und eine technisch einfache, haltbare und definierte hydraulische Verbindung zwischen den Kammern zu schaffen, die es ermöglicht, die Lagerausbildung verschiedenen, insbesondere auch radialen und/oder Drehbelastungsfällen anzupassen.

Diese Aufgabe wird erfindungsgemäss gelöst durch ein koaxial innenseitig zum Aussenrohr angeordnetes, haftend mit dem Gummiteil verbundenes und im Bereich der Kammern mit Fenstern versehenes Zwischenrohr, an dessen Umfang die Überströmkanäle verlaufen, wobei der die Überströmkanäle und die Fenster umgebende Bereich des Zwischenrohres gegenüber dem Aussenrohr abgedichtet ist. Vorzugsweise ist dabei das Zwischenrohr dem Aussenrohr benachbart angeordnet und zur Abdichtung vollständig in das Gummiteil derart einvulkanisiert, dass eine dünne, anpassungsfähige Gummischicht zwischen Aussenrohr und Zwischenrohr ausgebildet ist. Es versteht sich, dass sich die Gummischicht nicht über die Fenster und Kanäle im Zwischenrohr erstreckt. Insbesondere ist vorgesehen, die Gummischicht beidseitig der Kammern mit je einem umlaufenden, vorstehenden Dichtwulst zu versehen.

Durch die Erfindung ist ein zum Aussenrohr hin dichtendes hydraulisch dämpfendes Gummilager hoher Haltbarkeit mit definierten Kammerverbindungen geschaffen worden, welche dem Dämpfungsmittel einen bestimmten Strömungswiderstand entgegensetzen und eine vorbestimmbare Dämpfungskennung gewährleisten.

Ein wesentliches Ziel der Erfindung besteht darin, ein hydraulisch dämpfendes Gummilager zu entwickeln, welches verschiedenen Belastungsfällen anpassbar ist. Der Erfindungsgedanke, die Kammern des Lagers miteinander durch an sich bekannte umfangsseitig vorgesehene Aussparungen zu verbinden, welche erfindungsgemäss zwischen Aussenrohr und Zwischenrohr angeordnet sind, gestattet es in zweckmässiger Ausgestaltung der Erfindung, im Gummiteil mehr als zwei miteinander kommunizierende Kammern vorzusehen, wobei im Zwischenrohr eine entsprechende Zahl von Fenstern und Überströmkanälen ausgebildet sind. Lassen sich mit zwei einander gegenüberliegenden Kammern die in einer Richtung auftretenden Schwingungen dämpfen, so ist es beispielsweise mit vier etwa gleichen und über den Umfang gleich verteilten Kammern möglich, Schwingungen in 90° versetzten radialen Richtungen zu dämpfen. Bei drei und mehr Flüssigkeitskammern ergeben sich auch gute Dämpfungswerte bei umlaufenden Kräften, wie sie z.B. bei Unwuchten an Gelenkwellen oder Querlenkerlagerungen im Kraftfahrzeugbau auftreten können. Die Zahl der Kammern kann je nach Anwendungsfall gerade oder ungerade, vorzugsweise drei oder fünf, sein. Bei der ungeraden Zahl von Kammern im Lager, also beispielsweise Ausführungen mit drei oder fünf Kammern, ergeben sich in praktisch allen radialen Richtungen gleiche Feder- und Dämpfungseigenschaften. Je mehr Kammern dabei vorgesehen sind, desto stärker wird der grundsätzlich schwellende und abschwellende Verlauf der Dämpfung über 360° der Lineare angenähert.

Die Kammern können sich in radialer Richtung vom Aussenrohr bis zum Innenrohr erstrecken, und es können die Anbindungsflächen der zwischen Innenrohr und Zwischenrohr angeordneten Gummi-Kammerwände abwechselnd eine grosse Befestigungsbasis am Zwischenrohr und am Innenrohr aufweisen. Hierdurch entstehen Flüssigkeitskammern, welche sich bei Rotationsschwingungen abwechselnd verkleinern und vergrössern. Der Flüssigkeitsaustausch erfolgt auch hierbei über einen oder mehrere Überströmkanäle zwischen Aussenrohr und Innenrohr. Es ist vorgezogen, sämtliche Kammern durch Überströmkanäle zu verbinden. Es ist aber auch möglich, nur ausgewählte Kammern paarweise miteinander zu verbinden, wenn dies bestimmte Anwendungsfälle zweckmässig erscheinen lassen.

Zur Vereinfachung der Herstellung ist vorgeschlagen, zur Kammerausbildung einander gleiche Gummikörper zu verwenden, die mit Abstand zueinander über den Umfang des hydraulisch dämpfenden Gummilagers zwischen dem Innenrohr und dem Zwischenrohr verteilt angeordnet sind und derart die gummielastischen Kammerwände bilden. Die stirnseitig notwendige Abdichtung kann entweder mittels Gummiangüssen im Rahmen des Herstellungsverfahrens oder anders ausgebildeten Dichtscheiben vorgenommen werden. Die Gummikörper sind vorzugsweise im Querschnitt trapez- oder tassenförmig und können durch Metalleinlagen armiert sein. Ferner können in den Kammern zur Begrenzung der radialen Federwege in radialer Richtung sich erstreckende Anschlagnocken vorgesehen sein.

Das hydraulisch dämpfende Gummilager der Erfindung kann vielfältige Anwendung finden. Insbesondere im Kraftfahrzeugbau können die Lagerungen von Achsen, Querlenkern, Motoren mit dem Lager der Erfindung vorgenommen werden. Bei Wellenlagerungen, die schlagende, rollende oder andere umlaufende Belastungen aufnehmen müssen, sind die erfindungsgemässen Mehrkammer-Gummilager vorteilhaft, die nicht nur für die Übertragung von radial gerichteten Kräften, sondern auch für die Übertragung von Umfangskräften geeignet sind. Diese Ausführungsformen lassen auch eine Verwendung als elastische Kupplung zu.

Bevorzugt wird die Verwendung des Gummilagers der Erfindung zur Lagerung eines um eine Achse kippbaren Fahrerhauses eines Lastkraftwagens. An der Schwenkachse finden dabei die Lager der Erfindung Verwendung, da sie einmal in einfacher Weise die Verschwenkung um die Achse ermöglichen, die durch das Innenrohr durchgeführt ist, und zum anderen gut geeignet sind, die rollenden und schwellenden Bewegungen des Fahrerhauses zu dämpfen. An der anderen Befestigungsseite des LKW-Fahrerhauses findet eine kombinative Funktionsergänzung durch die Verwendung eines 2-Kammerlagers mit hydraulischer Dämpfung statt, welches dadurch gekennzeichnet ist, dass Stirnwand und Widerlager mindestens einer Kammer äussere und/oder innere Kegelmantelflächen aufweisen, wobei die gummielastische Umfangswand dieser Kammer als mit dem äusseren oder inneren Kegelmantel des Widerlagers haftend verbundene Schubfeder ausgebildet ist. Die Flanschverbindung dieses 2-Kammerlagers mit hydraulischer Dämpfung zum Fahrerhaus ist lösbar ausgestaltet, um das Wegkippen zu ermöglichen.

Es sind Anwendungsfälle für die Gummilager der erfindungsgemässen Art vorhanden, bei denen neben radialen und rotierenden Belastungen auch axiale Kräfte und/oder kardanische Momente gedämpft werden müssen. Als Beispiel sei der LKW-Betrieb in rauhem Gelände erwähnt. Bei solchen Anwendungsfällen haben sich Gummilager als vorteilhaft erwiesen, bei denen an jeder Stirnseite eine zusätzliche Ringkammer im Gummiteil ausgebildet ist, für die ein zusätzliches Fenster im Zwischenrohr vorhanden ist, wobei zur Verbindung sämtlicher Kammern des Lagers miteinander die umfangsseitigen Überströmkanäle axial im Zwischenrohr verlaufen. Dieses Lager ist geeignet, zusätzliche axiale Belastungen gedämpft aufzunehmen.

Um neben radialen, umlaufenden und axialen Belastungen auch kardanische Momente dämpfen zu können, ist in einer bevorzugten Ausgestaltung der Erfindung vorgeschlagen, das Lager in axialer Richtung spiegelbildlich zu verdoppeln, wobei die Kammern durch axial und/oder auf einem Kreisbogen verlaufende umfangsseitige Überströmkanäle miteinander verbunden sind. Durch die spiegelbildliche Verdopplung des Lagers sind axial voneinander entfernte Kammern vorhanden, welche hydraulisch verbunden sind und Kippmomente unter Volumenänderungen aufnehmen können. Dieses Doppellager kann in seinen sämtlichen Lagerteilen, d.h. dem Innenrohr, dem Gummiteil, dem Zwischenrohr und dem Aussenrohr, jeweils einstückig ausgebildet sein. Hierbei ist es zweckmässig, das Innenrohr mittig mit einem Ringbund, beispielsweise durch Stauchen, zu versehen, zu dessen beiden Seiten identische Lagerteile mit einer Mehrzahl von Kammern, insbesondere je fünf Kammern in einer Querschnittsebene, angeordnet sind, wobei der Ringbund von einem Wulst des Gummiteils vollständig umschlossen ist. Zu beiden Seiten des Wulstes können zur Dämpfung von Axialkräften und bei einer radialen Unterteilung der Kammern zur zusätzlichen Radialdämpfung mit Dämpfungsmittel gefüllte Kammern, vorzugsweise Ringkammern, im Gummiteil ausgebildet sein, wobei im Zwischenrohr entsprechende Fenster freigelassen sind und die Überströmkanäle zwischen den zusätzlichen Kammern axial umfangsseitig im Zwischenrohr ausgebildet sind.

Die Überströmkanäle im Zwischenrohr können spanabhebend geformt sein oder auch in einfacher Weise durch Einprägungen hergestellt sein. Die Kammerwände können durch radial nach innen abgebogene Teile des Zwischenrohres versteift sein. Herstellungsmässig ist dies besonders günstig, da die Fenster gemeinsam mit den Versteifungen durch einen Stanzvorgang herstellbar sind. Die Versteifungen stellen dann radial verlaufende Ausklinkungen des Zwischenrohres dar, welche zur Aufnahme von axialen Kräften besonders geeignet sind, wenn sie sich im wesentlichen bis zum gleichen radialen Abstand von der Mittelachse des Lagers wie der vom Innenrohr hochstehende Ringbund erstrecken.

Weitere Einzelheiten, Merkmale und Vorteile des Gegenstandes der Erfindung ergeben sich aus der nachfolgenden Beschreibung der zugehörigen Zeichnung, in der bevorzugte Ausführungsbeispiele des erfindungsgemässen hydraulischen dämpfenden Gummilagers schematisch dargestellt sind. In der Zeichnung zeigt:

Fig. 1 ein 2-Kammer-Gummilager, teilweise im Schnitt,

Fig. 2 das Gummilager der Fig. 1 in einem um 90° versetzten Schnitt,

Fig. 3 das Gummilager der Fig. 1 im Querschnitt,

Fig. 4 eine geänderte Ausführungsform eines Gummilagers mit vier Kammern im Querschnitt,

Fig. 5 eine geänderte Ausführungsform eines Gummilagers mit drei Kammern im Querschnitt,

Fig. 6 eine weitere Ausführungsform eines Gummilagers mit fünf Kammern in perspektivischer Schnittansicht,

Fig. 7 eine weitere Ausführungsform eines Mehrkammer-Gummilagers im Querschnitt,

Fig. 8 das Mehrkammer-Gummilager der Fig. 7 im Längsschnitt unter Weglassung der symmetrisch ausgebildeten anderen Hälfte,

Fig. 9 eine andere Ausführungsform eines Mehrkammer-Gummilagers im Querschnitt,

Fig. 10 eine weitere Ausführungsform eines Mehrkammer-Gummilagers im Querschnitt,

Fig. 11 eine LKW-Fahrerhauslagerung, schematisch,

Fig. 12 ein an der LKW-Fahrerhauslagerung der Fig. 11 angewandtes 2-Kammer-Motorlager im Schnitt,

Fig. 13 eine geänderte Ausführungsform eines Mehrkammer-Gummilagers im Gelenkschnitt,

Fig. 14 einen Querschnitt gemäss Linie A–B der Fig. 13 und

Fig. 15 einen Querschnitt gemäss Linie C–D der Fig. 13.

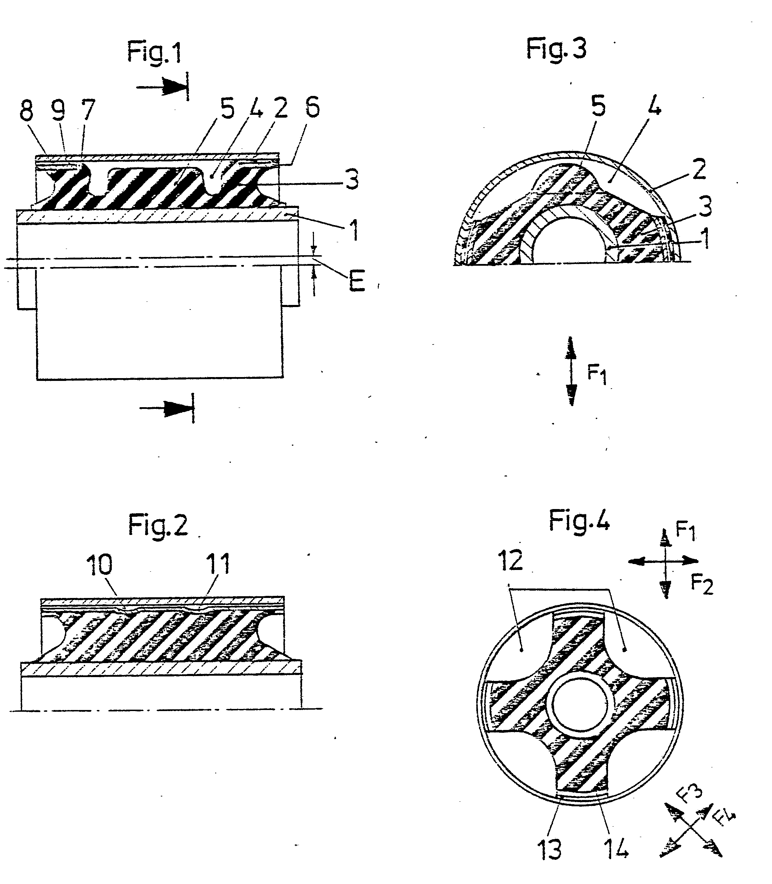

Ein hydraulisch dämpfendes Gummilager besteht grundsätzlich in sämtlichen Ausführungsformen aus einem Innenrohr 1, einem konzentrisch oder exzentrisch mit der Exzentrizität E dazu mit Abstand angeordnetem Aussenrohr 2 und dazwischen eingesetztem Gummiteil 3, in welchem mit einem Dämpfungsmedium gefüllte, hydraulisch über eine Drosselstelle miteinander verbundene Kammern in Form von Hohlräumen des Gummiteils 3 ausgebildet sind. In der in Fig. 1 der Zeichnung dargestellten Ausführungsform eines hydraulisch dämpfenden Gummilagers sind zwei einander diametral gegenüberliegende Kammern 4 ausgebildet, die unter einer Belastung beispielsweise in Richtung F1 gemäss Fig. 3 der Zeichnung ihr Volumen unter Umschichtung des Dämpfungsmediums, welches sich in den Kammern 4 befindet, ändern. Als Dämpfungsmedium wird Glykol verwendet.

Das zylindrische Zwischenrohr 6 ist im Rahmen des Vulkanisationsvorgangs aussen von einer dünnen Gummischicht 8 umgeben, welche beidseitig der Fenster 7 einen umlaufenden und nach aussen vorstehenden ringförmigen Dichtwulst 9 aufweist, der nach Art einer Dichtlippe beim fertigen Gummilager die Kammerabdichtung gegenüber dem Aussenrohr 2 bewirkt. Die beiden ringförmigen Dichtwülste 9 sind in Fig. 1 der Zeichnung durch das Aussenrohr komprimiert und daher in ihrer im unbelasteten Zustand vorspringenden Anordnung nicht erkennbar.

Das durch das Innenrohr 1, das Gummiteil 3 und das Zwischenrohr 6 in einer Vulkanisationsform gebildete Gummimetallteil wird in das zylindrische Aussenrohr von der Stirnseite her unter Herbeiführung eines Presssitzes eingeschoben. Die hydraulische Verbindung der beiden Kammern 4 findet mittels der Fig. 2 der Zeichnung entnehmbarer Überströmkanäle 10, 11 statt, welche umfangsseitig verlaufen und durch Aussparungen im Zwischenrohr 6 sowie der darüber angeordneten Gummischicht 8 gebildet sind. Die Überströmkanäle 10, 11 stellen der Durchströmung des Dämpfungsmittels bei einer Volumenänderung der Kammern 4 einen Strömungswiderstand entgegen und stellen somit die Dämpfungskräfte steuernde Durchbrüche in Form von Umfangsaussparungen dar.

Stirnseitig ist das Gummiteil 3 mit gewölbeartig verlaufenden Ringnuten versehen, die dazu dienen, einer Labilität der Kammern 4 in axialer Richtung entgegen zu wirken.

Das 2-Kammerlager der Fig. 1 bis 3 der Zeichnung ist in der Lage, Schwingungen, die in Richtung F1 auftreten, zu dämpfen, und weist in dazu in 90° versetzter radialer Richtung eine gute Abstützung, d.h. eine hohe radiale Federkonstante, auf. Die Anordnung der Überströmkanäle 10, 11 in dem Zwischenrohr 6, d.h. sowohl nach aussen als auch nach innen durch metallischen, nicht flexiblen Werkstoff begrenzt, erbringt eine definierte Dämpfungscharakteristik unter verschiedenen Belastungszuständen. Die Anordnung der Überströmkanäle am äusseren Umfang macht es möglich, Mehrkammerlager gemäss nachfolgenden Ausführungsbeispielen in einfacher Weise auszubilden und damit die Lagerausgestaltung verschiedenen radialen und/oder Drehbelastungsfällen anzupassen. Durch die exzentrische Anordnung wird erreicht, dass eine statische Vorlast vom Gummilager aufgenommen werden kann. Nach Aufbringung der statischen Vorlast stehen die Rohre zentrisch zueinander.

Die Ausführungsform eines hydraulisch dämpfenden Gummilagers, welche in Fig. 4 gezeichnet ist, unterscheidet sich von der bereits beschriebenen Ausführungsform dadurch, dass symmetrisch über den Lagerumfang verteilt vier etwa gleiche Flüssigkeitskammern 12 vorhanden sind. Dieses Lager hat in 90° zueinander versetzten Belastungsrichtungen, F1 und F2 gleiche Dämpfungswerte, während in den anderen Belastungsrichtungen F3 und F4, d.h. 45° zu den Dämpfrichtungen eine höhere radiale Federkonstante vorhanden ist. Bei paarweise unterschiedlicher Ausbildung der Kammern können auch unterschiedliche Dämpfungswerte in den verschiedenen radialen Richtungen F1 und F2 erzielt werden.

Sämtliche Kammern 12 des Lagers der Fig. 4 sind durch Überströmkanäle 13 miteinander verbunden, welche im Zwischenrohr 14 durch nutenförmige Ausnehmungen ausgebildet sind.

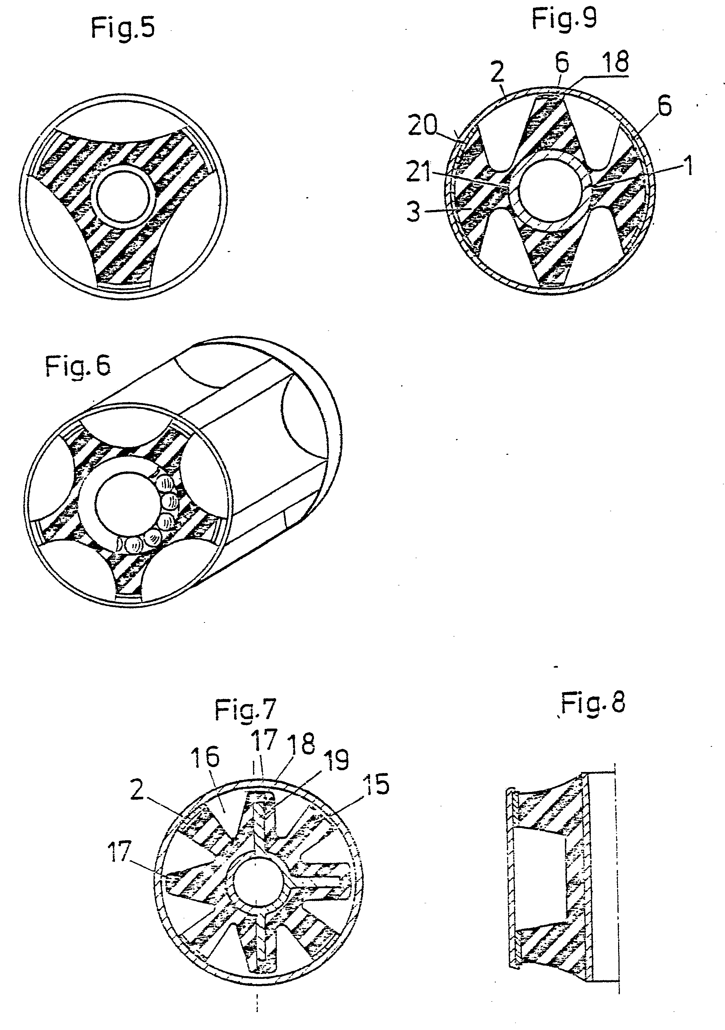

Anstelle einer Ausführung mit gerader Kammerzahl kann es bei bestimmten Anwendungsfällen zweckmässig sein, ein hydraulisch dämpfendes Gummilager mit ungerader Kammerzahl, beispielsweise mit drei Kammern gemäss Fig. 5 der Zeichnung oder fünf Kammern gemäss Fig. 6 der Zeichnung, zu bauen. Hiermit wird der Vorteil erzielt, dass sich in allen radialen Richtungen fast gleiche Feder- und Dämpfungseigenschaften ergeben, was bei einer Drehbeanspruchung sehr erwünscht ist. Je mehr Kammern hierbei vorgesehen sind, desto stärker wird der sinusförmig auf- und abschwellende Verlauf der Dämpfung über einen 360°-Belastungsfall der Lineare angenähert. Eine Anwendung dieser hydraulisch dämpfenden Gummilager beispielsweise an Gelenkwellen bietet sich an, bei denen in beliebigen radialen Richtungen oder umlaufenden Richtungen Belastungen auftreten. Das Lager der Fig. 6 der Zeichnung ist zu diesem Zweck auf einem Kugellager angeordnet, welches beispielsweise zur Lagerung einer Gelenkwelle gehören kann (Kardanwellen-Zwischenlager).

Ein Gummilager mit ähnlichem Aufbau, welches zur Durchführung von Rotationsschwingungen geeignet ist, ist in den Fig. 7 und 8 der Zeichnung entnehmbar. Hierbei ist jede Kammer 16, die im Gummiteil 15 ausgebildet ist, durch einen hochstehenden Anschlagnocken 17 zweigeteilt, welcher zum Aussenrohr 2 derart angeordnet ist, dass ein Dämpfungsspalt 18 verbleibt. Die Anschlagnocken 17 können wahlweise einen trapezförmigen Aufbau haben oder metallische Verstärkungen 19 aufweisen. Die gute Dämpfung von Drehbewegungen lässt das Lager zur Verwendung an Querlenkern im Kraftfahrzeugbau oder auch als Kupplung geeignet erscheinen, wobei das Drehmoment beispielsweise auf das Innenrohr antriebsseitig übertragen werden kann und der Antrieb gedämpft durch die Änderungen der Kammer voluminar erfolgt.

Um bei einem derart aufgebauten hydraulisch dämpfenden Gummilager alle Relativbewegungen in radialer Richtung und Drehrichtung dämpfen zu können, ist die Ausführungsform der Fig. 9 derart gewählt, dass sich die Kammern in radialer Richtung vom Aussenrohr 2 bis zum Innenrohr 1 erstrecken, wobei die Anbindungsflächen 20, 21 der zwischen Innenrohr 1 und Zwischenrohr 6 verlaufenden Gummi-Kammerwände abwechselnd eine grosse Befestigungsbasis am Zwischenrohr 6 und am Innenrohr 1 aufweisen. Bei dieser Ausführung wird wiederum in das geschlossene Aussenrohr 2 das vorgefertigte Gummi-Metallteil, bestehend aus dem Innenrohr 1, dem Gummiteil 3 und dem Zwischenrohr 6, eingefügt. Durch die abwechselnd mit grosser und kleiner Befestigungsbasis vorgenommene Haftverbindung entstehen Flüssigkeitskammern, welche sich bei Rotationsschwingungen abwechselnd verkleinern und vergrössern, wobei der Flüssigkeitsaustausch über Überströmkanäle erfolgt, die zwischen dem Aussenrohr 2 und dem Zwischenrohr 6 in bereits vorbeschriebener Weise ausgebildet sind.

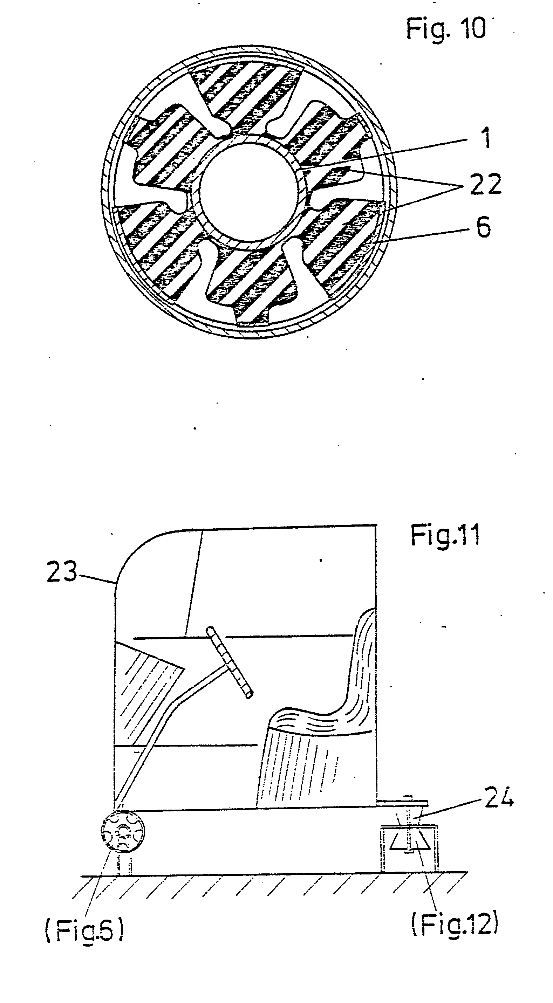

Eine weitere Ausgestaltung eines die gleiche Zielsetzung verfolgenden Gummilagers, nämlich in beliebiger radialer Richtung und in Rotationsrichtung dämpfen zu können, ist Fig. 10 der Zeichnung entnehmbar. Bei der dort gezeichneten Ausführungsform ist die Kammerzahl vergrössert und sind besonders geformte Gummikörper zur Ausbildung der Kammern verwendet. Sechs paarweise gleiche, symmetrisch verteilte, im Querschnitt tassenförmige Gummikörper 22 erstrecken sich in radialer Richtung zwischen dem Innenrohr 1 und dem Zwischenrohr 6, welches in der bereits vorbeschriebenen Weise mit Fenstern und Überströmkanälen, die sämtliche Kammern miteinander verbinden, versehen ist.

Fig. 11 zeigt eine bevorzugte Anwendung des hydraulisch dämpfenden Gummilagers der Fig. 10 an der Schwenkachse eines LKW-Fahrerhauses 23. Die Lagerung eines LKW-Fahrerhauses muss im Fahrbetrieb auftretende Schwingungen sowohl in radialer Richtung als auch in Rotationsrichtung dämpfen. Die Lagerung muss dabei derart sein, dass zwecks Durchführung von Wartungsarbeiten eine Schwenkung des Fahrerhauses nach vorn möglich ist. Zu diesem Zweck werden zwei Lager der Ausführungsform nach Fig. 6 an der Vorderseite des Fahrerhauses 23 benutzt und mit diesem über das Innenrohr 1 verbunden. Das Aussenrohr 2 wird am Fahrgestell des LKWs befestigt. Am hinteren Ende des Fahrerhauses werden beidseitig je ein gummielastisches Lager gemäss DE-OS 2 618 333 verwendet, welche sich dadurch auszeichnen, dass die gummielastischen Umfangswände, welche mit den beiden Stirnwänden und der Trennwand zwei Kammern bilden, als Kegelstumpf-Hohlkörper mit schräg verlaufenden Kreisflächen ausgebildet sind. In Kombination mit den vorn verwendeten hydraulisch dämpfenden Gummilagern gemäss Fig. 6 der Zeichnung wird eine Federkennung und Dämpfungscharakteristik für diesen Verwendungsfall geschaffen, die als besonders komfortabel empfunden wird. Die Eigenschaften der hinteren Gummilager, nämlich Schwingungen mit niedriger Frequenz und grosser Amplitude stark zu dämpfen und hochfrequente Schwingungen mit kleiner Amplitude durchzulassen, ergänzen die Eigenschaften der vorderen Lager, nämlich Dämpfung sowohl radialer als auch Drehbeanspruchungen, in überraschend günstiger Weise.

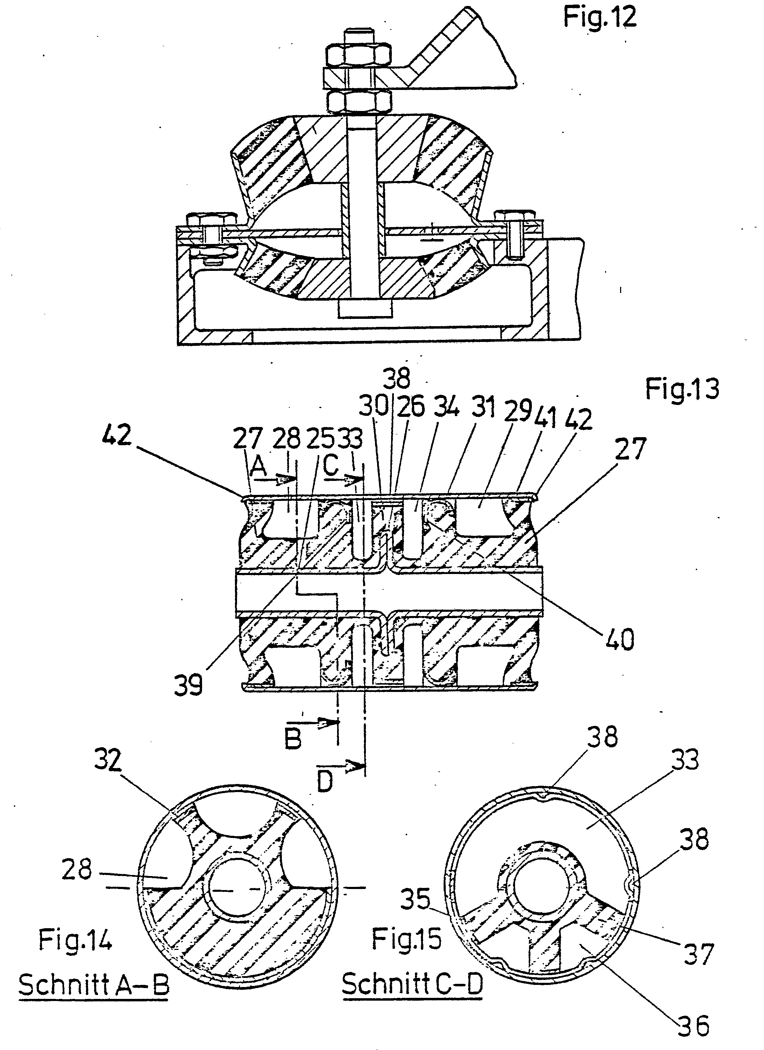

Die an sich bekannten hinteren hydraulisch dämpfenden Gummilager 24 des LKW-Fahrerhauses 23 sind ohne weitere Beschreibung in Fig. 12 der Zeichnung dargestellt. Ihr Aufbau ist in der DE-OS 2 618 333 erläutert. Es sind Anwendungsfälle für Mehrkammer-Gummilager der beschriebenen Art denkbar, bei denen neben radialen und rotierenden Belastungen auch kardanische Momente und/oder axiale Kräfte gedämpft werden müssen. Als Beispiel sei der LKW-Betrieb im rauhen Gelände, wie Steinbrüchen und Kiesgruben, erwähnt, wo Verwindungen des Fahrzeugaufbaus auftreten können. Für derartige Anwendungsfälle hat sich das in Fig. 13 bis 15 der Zeichnung dargestellte modifizierte 5-Kammer-Gummilager als vorteilhaft erwiesen, da es in der Lage ist, nicht nur radiale Beanspruchungen in einzelnen und umlaufenden Richtungen (Rotationsbeanspruchung) zu dämpfen, sondern auch axial und kardanisch wirkende Kräfte und Momente unter Dämpfung aufzunehmen.

Nach der in Fig. 13 dargestellten Lager-Ausführung ist das Innenrohr 25 in axialer Richtung gestaucht, so dass ein nach aussen vorstehender Ringbund 26 gebildet ist, zu dessen beiden Seiten symmetrisch in einem einstückigen Gummiteil 27 je fünf Kammern 28, 29 geformt sind. Das Gummiteil 27 weist mittig einen den Ringbund 26 vollständig umschliessenden Wulst 30 auf. Der Ringbund 26 stellt eine Armierung im inneren Bereich des Gummiwulstes 30 dar.

In das Gummiteil 27 ist aussen ein zylindrisches Zwischenrohr 31 einvulkanisiert, das über den Kammern 28, 29 mit Fenstern versehen ist. Die Kammern 28 sind untereinander durch Überströmkanäle 32 verbunden. Entsprechend sind die Kammern 29 durch Überströmkanäle (nicht dargestellt) miteinander verbunden, die im Zwischenrohr 31 eingeprägt sind.

Im Vergleich zu vorbeschriebenen Ausführungsformen sind zusätzliche Fenster im Zwischenrohr 31 beidseitig des Wulstes 30 ausgebildet, welche zu den darunter angeordneten Ringkammern 33, 34 gehören. Im unteren Teil der Fig. 15 sind Kammern 36 als Modifikation gezeichnet, die durch Radialstege 37 voneinander getrennt sind. Hierbei wird die Verbindung der einzelnen Kammern 36 miteinander durch Überströmkanäle 35 bewirkt.

Die ringförmigen Kammern 33 und 34 sind durch axial im Zwischenrohr 31 ausgebildete Überströmkanäle 38 miteinander verbunden, so dass die in ihnen befindliche Dämpfungsflüssigkeit gedrosselt umgeschichtet wird, wenn eine axiale Bewegung zwischen Innenrohr einerseits und Zwischenrohr/Aussenrohr anderseits aufgrund von Axialkräften auftritt. Die Kammervolumina ändern sich entsprechend.

Der Versteifung der Wände der Kammern 33 und 34 dienen innenseitig der Ringbund 26 des Innenrohres 25 und aussenseitig radial verlaufende Ausklinkungen 39, 40 des Zwischenrohrs 31. Fig. 13 ist entnehmbar, dass das gesamte Zwischenrohr 31 ein einstückiges Teil darstellt.

Das beschriebene Gummi-Metallteil ist in ein Aussenrohr 41 eingeschoben und durch seitliche Umbördelungen 42 gegen axiale Relativbewegungen gesichert. Die Abdichtung zwischen Aussenrohr 41 und Zwischenrohr 31 ist in der bereits beschriebenen Weise mittels ringförmiger Dichtwülste (nicht erkennbar) vorgenommen.

**Patentansprüche**

1. Hydraulisch dämpfendes Gummilager, bestehend aus einem Innenrohr (1), einem konzentrisch oder exzentrisch dazu mit Abstand angeordneten Aussenrohr (2) und dazwischen eingesetztem Gummiteil (3), in welchem dämpfungsmittelgefüllte, hydraulisch über umfangsseitig angeordnete, als Drosseln wirkende Überströmkanäle (10, 11) miteinander verbundene Kammern (4, 12, 16) ausgebildet sind, gekennzeichnet durch ein koaxial innenseitig zum Aussenrohr (2) angeordnetes, haftend mit dem Gummiteil (3) verbundenes und im Bereich der Kammern (4, 12, 16) mit Fenstern (7) versehenes Zwischenrohr (6, 14), an dessen Umfang die Überströmkanäle (10, 11) verlaufen, wobei der die Überströmkanäle (10, 11) und die Fenster (7) umgebende Bereich des Zwischenrohrs (6, 14) gegenüber dem Aussenrohr (2) abgedichtet ist.

2. Gummilager nach Anspruch 1, dadurch gekennzeichnet, dass das Zwischenrohr (6, 14) dem Aussenrohr (2) benachbart angeordnet ist und zur Abdichtung vollständig in das Gummiteil (3) derart einvulkanisiert ist, dass eine dünne anpassungsfähige Gummischicht (8) zwischen Aussenrohr (2) und Zwischenrohr (6, 14) ausgebildet ist.

3. Gummilager nach Anspruch 2, dadurch gekennzeichnet, dass die Gummischicht (8) beidseitig der Kammern (4, 12, 16) mit je einem umlaufenden vorstehenden Dichtwulst (9) versehen ist.

4. Gummilager nach einem der Ansprüche 1 bis 3, dadurch gekennzeichnet, dass im Gummiteil (3) mehr als zwei miteinander kommunizierende Kammern (12, 16) und im Zwischenrohr eine entsprechende Zahl von Fenstern und Überströmkanälen ausgebildet sind.

5. Gummilager nach einem der Ansprüche 1 bis 4, dadurch gekennzeichnet, dass die Zahl der Kammern gerade oder ungerade, vorzugsweise drei oder fünf, ist.

6. Gummilager nach einem der Ansprüche 1 bis 5, dadurch gekennzeichnet, dass bei gerader Kammerzahl die Kammern paarweise einander diametral gegenüberliegend symmetrisch verteilt sind.

7. Gummilager nach einem der Ansprüche 1 bis 6, dadurch gekennzeichnet, dass sich die Kammern in radialer Richtung vom Aussenrohr (2) bis zum Innenrohr (1) erstrecken und die Anbindungsflächen der zwischen Innenrohr (1) und Zwischenrohr (6) verlaufenden Gummiteile abwechselnd eine grosse Befestigungsbasis am Zwischenrohr (6) und am Innenrohr (1) aufweisen.

8. Gummilager nach Anspruch 7, dadurch gekennzeichnet, dass sechs paarweise gleiche, symmetrisch verteilte Gummikörper (22) die gummielastischen Kammerwände bilden.

9. Gummilager nach Anspruch 8, dadurch gekennzeichnet, dass die Gummikörper (22) im Querschnitt trapez- oder tassenförmig sind.

10. Gummilager nach einem der Ansprüche 1 bis 9, dadurch gekennzeichnet, dass in radialer Richtung sich erstreckende Anschlagnocken (17) in den Kammern vorgesehen sind.

11. Gummilager nach einem der Ansprüche 1 bis 10, dadurch gekennzeichnet, dass das Gummiteil (3) und/oder die Gummikörper (22) und/oder die Anschlagnocken (17) durch metallische Einlagen (10) verstärkt sind.

12. Gummilager nach einem der Ansprüche 1 bis 11, dadurch gekennzeichnet, dass an jeder Stirnseite eine zusätzliche Ringkammer im Gummiteil ausgebildet ist (nicht dargestellt), für die ein zusätzliches Fenster im Zwischenrohr vorhanden ist, und dass zur Verbindung sämtlicher Kammern des Lagers miteinander die umfangsseitigen Überströmkanäle axial im Zwischenrohr verlaufen.

13. Gummilager nach einem der Ansprüche 1 bis 12, dadurch gekennzeichnet, dass es in axialer Richtung spiegelbildlich verdoppelt ist, wobei die Kammern durch axial und/oder auf einem Kreisbogen verlaufende umfangsseitige Überströmkanäle (32) miteinander verbunden sind.

14. Gummilager nach Anspruch 13, dadurch gekennzeichnet, dass die spiegelbildliche Verdopplung in sämtlichen Lagerteilen untereinander einstückig vorgenommen ist.

15. Gummilager nach Anspruch 13 und 14, dadurch gekennzeichnet, dass das Innenrohr (25) mittig einen Ringbund (26) aufweist, zu dessen beiden Seiten identische Lagerteile mit einer Mehrzahl von Kammern (28, 29), insbesondere je fünf Kammern in einer Querschnittsebene, angeordnet sind, und dass der Ringbund (26) von einem Wulst (30) des Gummiteiles (27) vollständig umschlossen ist.

16. Gummilager nach Anspruch 15, dadurch gekennzeichnet, dass zu beiden Seiten des Wulstes (30) zusätzliche mit einem Dämpfungsmittel gefüllte Kammern, vorzugsweise Ringkammern (33, 34), im Gummiteil (27) ausgebildet und im Zwischenrohr (31) entsprechende Fenster freigelassen sind, und dass die Überströmkanäle (38) zwischen den zusätzlichen Kammern (33, 34) axial umfangsseitig im Zwischenrohr (31) ausgebildet sind.

17. Gummilager nach Anspruch 16, dadurch gekennzeichnet, dass die vom Wulst (30) entfernten Wände der zusätzlichen Ringkammern (33, 34) durch radial verlaufende Ausklinkungen (39, 40) des Zwischenrohrs (31) versteift sind, die sich im wesentlichen bis zu dem gleichen radialen Abstand von der Mittelachse wie der Ringbund (26) erstrecken.

18. Gummilager nach einem der Ansprüche 1 bis 17, dadurch gekennzeichnet, dass die Überströmkanäle (38) im Zwischenrohr (31) durch Einprägungen hergestellt sind.

## Claims

1. Hydraulically damping rubber bushing comprising an inner tube (1), an outer tube (2) arranged spaced from it concentrically or eccentrically and a rubber portion (3) inserted between them, in which portion there are formed chambers (4, 12, 16), filled with a damping medium and hydraulically connected together through peripherally disposed transfer passages (10, 11) acting as throttling restrictions, characterised by an intermediate tube (6, 14) arranged coaxially inside the outer tube (2), bonded to the rubber portion (3), and provided in the region of the chambers (4, 12, 16) with windows (7), the transfer passages (10, 11) being disposed at its periphery, and the region of the intermediate tube (6, 14) enclosing the transfer passages (10, 11) and the windows (7) being sealed with respect to the outer tube (2).

2. Rubber bushing according to claim 1, characterised in that, the intermediate tube (6, 14) is arranged adjacent to the outer tube (2) and, to achieve sealing, is completely vulcanised into the rubber portion (3) in such a manner that a thin conformable rubber layer (8) is formed between the outer tube (2) and the intermediate tube (6, 14).

3. Rubber bushing according to claim 2, characterised in that, the rubber layer (8) is provided on both sides of the chambers (4, 12, 16) with a respective projecting circumferential sealing bead (9).

4. Rubber bushing according to one of claims 1 to 3, characterised in that more than two mutually intercommunicating chambers (12, 16) are formed in the rubber portion (3) and a corresponding number of windows and transfer passages are formed in the intermediate tube.

5. Rubber bushing according to one of claims 1 to 4, characterised in that the number of chambers is even or odd, preferably three or five.

6. Rubber bushing according to one of claims 1 to 5, characterised in that, with the number of chambers even, the chambers are distributed symmetrically in diametrically opposed pairs.

7. Rubber bushing according to one of claims 1 to 6, characterised in that, the chambers extend in a radial direction from the outer tube (2) to the inner tube (1) and the engaging surfaces of the rubber portions extending between the inner tube (1) and the intermediate tube (6) have a large attachment area alternately on the intermediate tube (6) and on the inner tube (1).

8. Rubber bushing according to claim 7, characterised in that, six rubber bodies (22), distributed symmetrically in equal pairs, form the resilient walls of the chambers.

9. Rubber bushing according to claim 8, characterised in that, the rubber bodies (22) are of trapezium or cup shape in cross-section.

10. Rubber bushing according to one of claims 1 to 9, characterised in that, stop lobes (17), extending in a radial direction, are provided in the chambers.

11. Rubber bushing according to one of claims 1 to 10, characterised in that, the rubber portion (3) and/or the rubber bodies (22) and/or the stop lobes (17) are reinforced by metal inserts (19).

12. Rubber bushing according to one of claims 1 to 11, characterised in that, an additional chamber (not illustrated) is formed at each face of the rubber portion, for which chamber an additional window is provided in the intermediate tube, and that, to connect all the chambers of the bushing together, the peripheral transfer passages extend axially in the intermediate tube.

13. Rubber bushing according to one of claims 1 to 12, characterised in that, it is of mirror-image double form axially, the chambers being connected by peripheral transfer passages (32) extending axially and/or over an arc of a circle.

14. Rubber bushing according to claim 13, characterised in that, the mirror-image doubling applies in one piece to all the components of the bushing with one another.

15. Rubber bushing according to claim 13 and 14, characterised in that, the inner tube (25) has an intermediate annular collar (26), on both sides of which are arranged identical bushing components with a plurality of chambers (28, 29), in particular five chambers each in one transverse plane, and that the annular collar (26) is entirely surrounded by a bead (30) of the rubber portion (27).

16. Rubber bushing according to claim 15, characterised in that additional chambers filled with a damping medium, preferably annular chambers (33, 34), are formed in the rubber portion (27) on both sides of the bead (30) and corresponding windows are left free in the intermediate tube (31), and that the transfer passages (38) between the additional chambers (33, 34) are formed axially in the intermediate tube (31) on its peripheral face.

17. Rubber bushing according to claim 16, characterised in that, the walls of the additional annular chambers (33, 34) which are furthest from the bead (30) are stiffened by means of radially extending flange-like deformations (39, 40) of the intermediate tube (31) which extend substantially to the same radial distance from the central axis as the annular collar (26).

18. Rubber bushing according to one of claims 1 to 17, characterised in that, the transfer passages (38) in the intermediate tube (31) are formed by pressed-out portions.

## Revendications

1. Coussinet en caoutchouc à amortissement hydraulique, constitué par un tube intérieur (1), un tube extérieur (2) concentrique ou excentrique au précédent, à une certaine distance, et une pièce en caoutchouc (3) insérée entre les deux, dans laquelle sont réalisées des chambres (4, 12, 16) reliées entre elles hydrauliquement par des canaux de transmission (10, 11) agissant comme éléments d'étranglement, placés du côté de la circonférence, ces chambres étant remplies d'un fluide amortisseur, coussinet caractérisé en ce qu'il est prévu un tube intermédiaire (6, 14) pourvu de fenêtres (7) dans la zone des chambres (4, 12, 16) disposé coaxialement à l'intérieur du tube extérieur (2) relié par adhérence avec la pièce en caoutchouc (3), et sur la circonférence duquel s'étendent les canaux de transmission (10, 11), ces canaux (10, 11) et la zone du tube intermédiaire (6, 14) entourant les fenêtres (7) étant rendus étanches par rapport au tube extérieur (2).

2. Coussinet en caoutchouc suivant la revendication 1, caractérisé en ce que le tube intermédiaire (6, 14) est disposé dans le voisinage du tube extérieur (2) et, pour qu'il soit hermétique, il es vulcanisé dans la pièce en caoutchouc (3) de telle façon que, entre le tube extérieur (2) et ce tube intermédiaire (6, 14), soit formée une mince couche de caoutchouc (8), capable de s'adapter par conformation.

3. Coussinet en caoutchouc suivant la revendication 2, caractérisé en ce que la couche de caoutchouc (8) est pourvue, des deux côtés de chaque chambre (4, 12, 16), d'un bourrelet d'étanchéité et en saillie circulaire (9).

4. Coussinet en caoutchouc suivant l'une des revendications 1 à 3, caractérisé en ce que, dans la pièce en caoutchouc (3), sont formées plus de deux chambres communiquant entre elles (12, 16) et, dans le tube intermédiaire est prévu un nombre correspondant de fenêtres et de canaux de transmission.

5. Coussinet en caoutchouc suivant l'une des revendications 1 à 4, caractérisé en ce que le nombre de chambres est pair ou impair, de préférence égal à trois ou cinq.

6. Coussinet en caoutchouc suivant l'une des revendications 1 à 5, caractérisé en ce que, si le nombre des chambres est pair, des chambres étant réparties par paires, symétriquement, diamètralement opposées.

7. Coussinet en caoutchouc suivant l'une quelconque des revendications 1 à 6, caractérisé en ce que les chambres s'étendent dans le sens radial du tube extérieur (2) jusqu'au tube intérieur (1), et les surfaces de liaison des pièces de caoutchouc qui s'étendent entre le tube extérieur (1) et le tube intermédiaire (6) présentent une grande base de fixation alternativement sur le tube intermédiaire (6) et sur le tube intérieur (1).

8. Coussinet en caoutchouc suivant la revendication 7, caractérisé en ce que six pièces en caoutchouc (22) identiques, réparties symétriquement par paires, forment les cloisons des chambres ayant l'élasticité du caoutchouc.

9. Coussinet en caoutchouc suivant la revendication 8, caractérisé en ce que les pièces en caoutchouc (22) présentent, en coupe transversale, une forme trapézoidale ou de tasse.

10. Coussinet en caoutchouc suivant l'une quelconque des revendications 1 à 9, caractérisé en ce que sont prévus dans les chambres, des bossages de butée (17) s'étendant dans le sens radial.

11. Coussinet en caoutchouc suivant l'une quelconque des revendications 1 à 10, caractérisé en ce que la pièce en caoutchouc (3) et/ou les pièces en caoutchouc (22) et/ou les bossages de butée (17) sont renforcées par des insertions (19) métalliques.

12. Coussinet en caoutchouc suivant l'une quelconque des revendications 1 à 11, caractérisé en ce que, sur chacune des faces frontales, dans la pièce en caoutchouc, est réalisée une chambre annulaire supplémentaire (non représentée), pour laquelle il est prévu, dans le tube intermédiaire, une fenêtre supplémentaire, et pour relier entre elles toutes les chambres, les canaux de transmission s'étendent axialement sur le tube intermédiaire du côté de la circonférence.

13. Coussinet en caoutchouc suivant l'une quelconque des revendications 1 à 12, caractérisé en ce que ce coussinet est double dans le sens axial, en symétrie inversée, les chambres étant reliées entre elles par des canaux de transmission (32) qui s'étendent du côté de la circonférence, axialement et/ou suivant un arc de cercle.

14. Coussinet en caoutchouc suivant la revendication 13, caractérisé en ce que la duplication en symétrie inversée est assurée en une seule pièce pour toutes les pièces du coussinet.

15. Coussinet en caoutchouc suivant l'une des revendications 13 et 14, caractérisé en ce que le tube intérieur (25) comporte, en son milieu, un collet (26) annulaire, des deux côtés duquel sont disposés des coussinets identiques à plusieurs chambres (28, 29), présentant en particulier cinq chambres dans un plan en coupe transversale, et le collet annulaire (26) étant entouré complètement par un bourrelet (30) de la pièce en caoutchouc (27).

16. Coussinet en caoutchouc suivant la revendication 15, caractérisé en ce que, des deux côtés du bourrelet (30), sont réalisées des chambres supplémentaires, remplies de fluide amortisseur, de préférence des chambres annulaires (33, 34), des fenêtres correspondantes étant pratiquées dans le tube intermédiaire (31), et les canaux de transmission (38) qui se trouvent entre les chambres supplémentaires (33, 34) dans le tube intermédiaire (31).

17. Coussinet en caoutchouc suivant la revendication 16, caractérisé en ce que les cloisons des chambres supplémentaires (33, 34) éloignées du bourrelet (30) sont raidies au moyen d'entailles (39, 40) dans le tube intermédiaire (31), qui s'étendent radialement sensiblement jusqu'à la même distance radiale de l'axe central que le collet annulaire (26).

18. Coussinet en caoutchouc suivant l'une quelconque des revendications 1 à 17, caractérisé en ce que les canaux de transmission (38) sont réalisés dans le tube intermédiaire (31) par emboutissage.

# Fig.1

# Fig.3

$F_1$

# Fig.2

# Fig.4

$F_1$

$F_2$

$F_3$

$F_4$

Fig.5

Fig.9

Fig.6

Fig.7

Fig.8

Fig. 10

1
22
6

Fig.11

23

(Fig.5)

24

(Fig.12)

Fig.12

Fig.13

42  27 28 2533  30 26 34 31 29 41 42  27

38

A  C

39

B

D

40

Fig.14

Schnitt A–B

32

28

Fig.15

Schnitt C–D

38

33

38

35

37

36